# EUROPÄISCHE PATENTANMELDUNG

(11) **EP 1 780 500 A1**
(43) Veröffentlichungstag der Anmeldung: **02.05.2007**
(21) Anmeldenummer: 06405336.6
(22) Anmeldetag: 08.08.2006
(51) Int. Cl.: G01B 7/06, B29C 47/92

(54) **Verfahren zum Messen der Dicke von Mehrschichtfolien**

(30) Priorität: 28.10.2005 EP 05405613; 14.12.2005 EP 05405697
(71) Anmelder: Hch. Kündig & Cie. AG, 8630 Rüti/ZH (CH)
(72) Erfinder: Keller, Albert c/o Hch. Kündig & Cie. AG, 8630 Rüti ZH (CH); Hänggli, Markus c/o Hch. Kündig & Cie. AG, 8630 Rüti ZH (CH); Weber, Philipp c/o Hch. Kündig & Cie. AG, 8630 Rüti ZH (CH); Stuker, Peter c/o Hch. Kündig & Cie. AG, 8630 Rüti ZH (CH)
(74) Vertreter: Hammer, Bruno

(57) **Zusammenfassung**

Bei dem Verfahren zum Bestimmen der Dicke von Mehrschichtfolien 13 mit Schichten aus verschiedenen nichtleitenden Werkstoffen wird die Dicke der Mehrschichtfolie 13 mit einem ersten Sensor 17 und einem zweiten Sensor 16 und eventuell weiteren Sensoren gemessen. Der erste Sensor 17 misst mit einer kurzen Zykluszeit von ca 1-2 Minuten das Profil der Gesamtdicke, jedoch mit einem grossen Messfehler. Der zweite Sensor 16 misst das Profil der Gesamtdicke mit einem kleinen Messfehler, jedoch mit einer langen Zykluszeit von ca. 10 bis 30 Minuten.

Durch den Vergleich der beiden Dickenprofile kann für den ersten Sensor 17 ein Korrekturprofil berechnet werden. Unter der Voraussetzung, dass dieses Korrekturprofil über die lange Zykluszeit stabil bleibt, können alle Dickenprofrle des Sensors 17 mit diesem Korrekturprofil verrechnet werden, bis wieder ein neues genaueres Dickenprofil vom zweiten Sensor zur Verfügung steht und somit ein neues Korrekturprofil berechnet werden kann.

## Beschreibung

Die Erfindung bezieht sich auf ein Verfahren zum Bestimmen der Dicke von Mehrschichtfolien nach dem Oberbegriff des unabhängigen Patentanspruchs 1. Mehrschichtfolien aus Kunststoffen sind aus einer Vielzahl von Schichten aus verschiedenen Werkstoffen aufgebaut.

Die Mehrschichtfolien werden aus verschiedenen sog. Thermoplasten, mit Coextrusion bzw. Mehrschichtextrusion hergestellt. Bekannte solche Extrusionsverfahren sind Blasextrusion und Flachextrusion. Bei der Blasextrusion werden sog. Blasfolien erzeugt. Die Schmelze wird bei der Blasextrusion aus einer Ringdüse extrudiert und zu einem Schlauch geformt. In den Schlauch wird Luft eingeblasen um diesen aufzuweiten. Der Schlauch wird dann flach gelegt, in vielen Fällen in zwei oder mehr Bahnen geschnitten und aufgewickelt.

Bei der Flachfollenextrusion wird die Schmelze aus einer Schlitzdüse extrudiert. Häufig verwendete Thermoplaste sind Polyethylen (PE), Polypropylen (PP), Polyamid (PA), Ethylen-Vinylalkohol-Copolymere (EVOH), und andere mehr.

Bei der Herstellung von Mehrschichtfolien werden gleichzeitig verschiedene Thermoplaste mit verschiedenen Eigenschaften durch Mehrfachdüsen extrudiert und zur Mehrschichtfolie vereinigt. In vielen Fällen ist es erforderlich, zwischen einzelnen Schichten der Mehrschichtfolie sog. Haftvermittler (HV) einzubringen. Die Haftvermittler haben die Bindung zwischen Schichten der Mehrschichtfolie zu verbessern.

Mehrschichtfolien werden für die Verpackung von Lebensmitteln in grossen Mengen verwendet. Man spricht dabei von Barrierekunststoffen. Diese Mehrschichtfolien weisen Schichten auf, die z.B. für Sauerstoff, Feuchtigkeit oder sonst für bestimme Stoffe wenig durchlässig sind, was zu besserer Haltbarkeit der Lebensmitteln führt. Für die Verpackung von Lebensmitteln werden Mehrschichtfolien auch als Schrumpffolien, als Kochbeutel, keimfreie Verpackungen für Molkereiprodukte usw. verwendet. Typische Sperrschichtfolien haben z.B. einen Aufbau
PE oder PP
HV
SPERRSCHICHT (PA, EVOH)
HV
PE oder PP

Weitere Einzelheiten über Mehrschichtfolien, die dafür verwendeten Materialien und deren Eigenschaften, sowie deren Herstellung findet man z.B. in gut verständlicher Form im Buch "Kunststoff-Folien, Herstellung, Eigenschaften, Anwendung" von Joachim Nentwig, Carl Hanser Verlag München Wien, 1994.

Bei der Herstellung von Folien ganz allgemein, aber insbesondere auch bei der Herstellung von Mehrschichtfolien wird die Dicke der Folien überwacht, und bei Abweichungen wird z.B. bei der Herstellung von Flachfolien die Breite des Schlitzes von Extrusionsdüsen verändert, um möglichst Folien gleicher Dicke herzustellen. Bei der Blasfolienextrusion wird lokal die Temperatur der Schmelze oder der Kühlluft oder die Menge der Kühlluft verändert.

Damit z.B. die Qualität der Blasfolie auf dem ganzen Umfang gleich ist, muss die Dicke auf dem ganzen Umfang möglichst gleichmässig sein. Eine gleichmässige Dicke ist unter anderem auch notwendig, um bei der weiteren Verarbeitung der Folie z.B. ein gleichmässiges Bedrucken zu ermöglichen. Um eine gleichmässige Dicke in der Produktion zu überwachen oder durch Stellelemente im Blaskopf zu regeln, muss das Dickenprofil der Folie gemessen werden.
Es sind beispielsweise folgende Sensortypen für die Dickenmessung an Folien bekannt:
Kapazitive Sensoren welche durch die Dielektrizitätskonstante und/oder den Dämpfungsfaktor der Folie beeinflusst werden. Kapazitive Sensoren können reflektiv oder transmissiv messen.
Sensoren die mit lonisierender Strahlung, mit Rückstreuung oder mit Absorption arbeiten und messen.
Sensoren die mit Infrarot-Absorption transmissiv arbeiten und messen. Sensoren welche optisch mit Interferenz-Verfahren arbeiten und messen.
Sensoren welche mechanisch oder pneumatisch die Dicke nach der Flachlegung messen.
Sensoren die thermisch messen.
Sensoren, welche Ultraschall verwenden und Laufzeiten, Dämpfung, Reflexion und/oder Phasenverschiebungen messen.

Für die Regelung der Dicke der Folie ist es günstiger, die Foliendicke möglichst schnell nach dem Blaskopf zu erfassen, also noch an der Folienblase, nicht erst viele Meter später nach der Flachlegung. Dies ist aber nur möglich mit Messsystemen, welche allein von aussen an der Folienblase mit einem reflektiven System arbeiten. Am häufigsten werden kapazitive Systeme verwendet. Sensoren, welche mit der Rückstreuung von ionisierender Strahlung arbeiten werden wegen der damit verbundenen Risiken und Auflagen nur ungem eingesetzt. Optische Sensoren können nicht verwendet werden, wenn auch stark eingefärbte Folien gemessen werden müssen.

Sensoren, die kapazitiv nach dem Reflexionsprinzip arbeiten, werden z.B. mit Vorteil zur Messung der Foliendicke an der Folienblase von Blasfolienextrusionsanlagen verwendet. Um das Dickenprofil einer Folienblase online zu erfassen, wird ein Sensor auf einer ringförmigen Konstruktion um die Folienblase herumgeführt. Ein Umlauf dauert typischerweise 1-2 Minuten. Der Sensor wird mit gleichmässigem Druck gegen die Folienblase gedrückt. Dies ermöglicht eine sehr gute und exakte Online-Erfassung des Dickenprofils von z.B. PE-Folien.

Die Messsignale von kapazitiven Sensoren sind von der Dielektrizitätskonstante des zu messenden Materials abhängig. Die Messsignale von Sensoren, die nach dem Reflexionsprinzip arbeiten, sind praktisch direkt proportional zur Dicke einer Folie und zur Dielektrizitätskonstante des Materials der Folie. Die Dielektrizitätskonstanten von gewissen Materialien sind temperaturabhängig.

Bei der Messung an Mehrschichtfolien die aus mehreren Schichten von Thermoplasten mit z.T. stark unterschiedliche Dielektrizitätskonstanten bestehen, kann die Messung der Dicke und von Dickenprofilen fehlerhaft sein. Da der Sensor nicht erkennen kann, dass sich z.B. gleichzeitig die Dicke der gesamten Folie und auch die Dicke einer oder mehrerer der Schichten der Mehrschichtfolie gleichzeitig so ändern, dass sich der Fehler, der von der Dicke der Folie herrührt und der Messfehler, der durch die Dicke einer Schicht der Mehrschichtfolie herrührt gegenseitig teilweise oder ganz kompensieren. Der kapazitive Sensor stellt keine oder eine falsche, eine zu hohe oder zu geringe Änderung der Dicke fest.

Dielektrische Eigenschaften von Kunststoffen, wie Thermoplasten, die für Mehrschichtfolie verwendet werden, sind z.B. in Buch "Die Kunststoffe und ihre Eigenschaften", Hans Domininghaus, Verlag Springer, 1998 zu finden. Auf Seite 128 sind z.B. die Dielektrizitätszahlen ε und der dielektrische Verlustfaktor tan δ für Kunststoffe, die für Mehrschichtfolien verwendet werden in Abhängigkeit von der Temperatur graphisch dargestellt. Daraus ist ersichtlich, dass es in vielen Fällen zur weiteren Erhöhung der Messgenauigkeit der Sensoren beiträgt, wenn auch die Temperatur der Folie gemessen und in die Ermittlung der Korrekturwerte und Werte der Dicke mit einbezogen werden.

Um das Problem mit der überhöhten Empfindlichkeit gegenüber Folien mit sehr hoher Dielektrizitätskonstanten zu vermeiden, kann das kapazitiv transmissiv messende System benutzt werden, in der Produktion allerdings erst nach der Flachlegung, wenn die Folie von beiden Seiten zugänglich ist.

Bei dieser Methode ist am Rand der flachgelegten Folie ein C-förmiger Kondensator angeordnet. Der Rand der Folie wird durch diesen Sensor geführt. Von der Änderung der Kapazität des Sensors wird auf Änderungen der Dicke der Folie geschlossen. Die Messempfindlichkeit dieser Sensoren, die transmissiv messen, ist direkt proportional zur Dicke und nur wenig abhängig von den Dielektrizitätskonstanten der Werkstoffe der zu messenden Folie, denn die Messwerte von kapazitiven Dickensensoren, die nach dem transmissiven Verfahren arbeiten, sind etwa ab einer Dielektrizitätszahl εᵣ ≥ 5 praktisch nur noch von der Dicke des Materials abhängig. Somit erhält man mit diesem Messsystem einen Dickenwert, welcher bei Barrierefolien wesentlich genauer ist, als die Messung mit dem kapazitiv reflektiven Sensor.

Bei der Messung wird der Umstand ausgenutzt, dass der Folienschlauch bei der Flachlegung kontinuierlich dreht oder um 360° reversierend dreht. Eine Drehung des Folienschlauchs um 360° mit der Flachlegung bzw. durch Drehen des Blaskopfs dauert typisch etwa 10 bis 30 Minuten. Dadurch gerät jede Stelle auf dem Umfang der Folienblase einmal pro Umdrehung oder pro Reversierung in den Rand der Folie und somit in den Bereich des C-förmigen Sensors. Somit wird auch bei diesem Verfahren das Dickenprofil der Folie über den ganzen Umfang die ganze Breite erfasst. Die Messung der Dicke erfolgt in regelmässigen Abständen von z.B. einem oder mehreren Zentimetern über den Umfang der flachgelegten Folienblase, so dass der Umfang der Folienblase in Segmente aufgeteilt wird.

Der C-förmige Sensor an der Folienkante erfasst zwar immer die Dicke zweier Segmente zusammen. Durch die Rotation des Folienschlauchs befindet sich aber immer eine neue Kombination aus oberen und unteren Segmenten im Messbereich des Sensors. Durch diese Gegebenheit lässt sich rechnerisch die Dicke der Einzelsegmente bestimmen und zu einem Dickenprofil über den gesamten Umfang kombinieren.

Aufgabe der Erfindung ist es nun, ein Verfahren zu schaffen, welches die Vorteile der beiden Verfahren kombiniert, um deren Nachteile zu eliminieren: Das erste kapazitive Messsystem, welches reflektiv misst, kann an der Folienblase auf einer Reversiereinrichtung plaziert werden und kann entsprechend der Reversierzeit etwa im Abstand von 1-2 Minuten ein Dickenprofil liefern. Die Dickenmesswerte sind aber durch verschiedene Dielektrizitätskonstanten in den verschiedenen Folienschichten sowie Temperatureinflüsse stark verfälscht.

Das zweite kapazitive Messsystem, welches transmissiv misst, kann erst nach der Flachlegung am Folienrand plaziert werden und liefert entsprechend der Reversierzeit des Abzuges etwa im Abstand von 10...30 Minuten ein Dickenprofil. Die Dickenmesswerte sind aber nur wenig durch verschiedene Dielektrizitätskonstanten in den verschiedenen Folienschichten sowie Temperatureinflüsse verfälscht.

Es ist Stand der Technik, dass aus einem Paar von Messwerten der gleichen Grösse, welches mit verschiedenen Mess-Methoden erfasst wird, ein genaueres Resultat bestimmt und Messfehler der einzelnen Methoden korrigiert werden können.

Dabei kann entweder der ungenauere Messwert auf die Qualität des genaueren korrigiert werden, oder es kann aus den beiden Methoden ein noch genaueres Resultat bestimmt werden, wenn die Abhängigkeit der Messmethoden vom zu messenden Produkt bekannt ist.

In EP 1 205 293 A1 wird zum Beispiel gezeigt, wie unter Ausnützung der verschiedenen Abhängigkeit der Dielektrizitätskonstante von Schichten der Mehrschichtfolie von der Temperatur, mit kapazitiven Sensoren die Dicken der Einzelschichten und somit auch die Gesamtdicke korrekt gemessen werden können.

Der wesentlicher Punkt der Erfindung ist, dass aus dem Messwertpaar nicht nur das genauere Ergebnis, sondern zusätzlich ein Korrekturwert gewonnen wird, welcher zusammen mit nur einem Messwert ebenfalls wieder das genauere Ergebnis ergibt.

lm Allgemeinen genügt für die Regelung der Gesamtdicke die Genauigkeit der Messwerte, welche ein transmissiv messender kapazitiver Sensor liefert. Genügend gute Korrekturwerte können somit auch gewonnen werden, wenn an Stelle der korrekten Gesamtdicke nur die Dickenwerte des kapazitiv transmissiv messenden Sensors verwendet werden.

Erfindungsgemäss weist das Verfahren die Merkmale des kennzeichnenden Teils des unabhängigen Anspruchs 1 auf. Die abhängigen Ansprüche beziehen sich auf vorteilhafte Ausführungsformen der Erfindung.

Wenn einer der Messwerte in schneller Folge gemessen werden kann, der andere aber nur in langsamer Folge, so kann anstelle des langsamen Messwertes der Korrekturwert so mit dem schnelleren Messwert verrechnet werden, dass durch diese Extrapolation in schneller Folge korrigierte Werte entstehen.

Schneller messen bedeutet in der vorliegenden Schrift, dass das Profil von einem Sensor in kürzerer Zeit gemessen wird als mit einem anderen Sensor. Umgekehrt bedeutet langsam in der vorliegenden Schrift, dass der Sensor für die Messung des Profils mehr Zeit braucht, als der Sensor der schnell misst.

Bei der beschriebenen Anwendung zur Messung eines Dickenprofils ist der Korrekturwert nicht eine Konstante, sondern ein Wert, der abhängig ist von der Position auf dem Umfang der Folienblase. Die ganze Reihe der Korrekturwerte über den Umfang wird als Korrekturprofil bezeichnet.

Unter der Annahme, dass der Effekt, welcher die Abweichung des Messwertes der gesamten Dicke für den einzelnen Sensor verursacht, an jeder Folienposition über längere Zeit konstant bleibt, kann anstelle der Messwerte des anderen Sensors dieses früher bestimmte und gespeicherte Korrekturprofil für die nachfolgenden Profile zur Korrektur der Messwerte des einzelnen Sensors verwendet werden, um den korrekten Wert der gesamten Dicke zu bestimmen.

Statt kapazitiven Sensoren, wie dies im Beispiel beschrieben ist, können auch Sensoren die nach anderen Prinzipien arbeiten, oder ein kapazitiver Sensor und ein nach einem anderen Prinzip arbeitender Sensor verwendet werden. Wesentlich ist nur, dass die Messsignale der Sensoren verschiedene Empfindlichkeit für z.B. verschiedene Thermoplaste aufweisen, aus denen die Mehrschichtfolie aufgebaut ist, beziehungsweise, dass das langsamere System eine wesentlich genauere Messung ermöglicht.

Die Erfindung wird nachstehend anhand der schematischen Zeichnung näher erläutert.

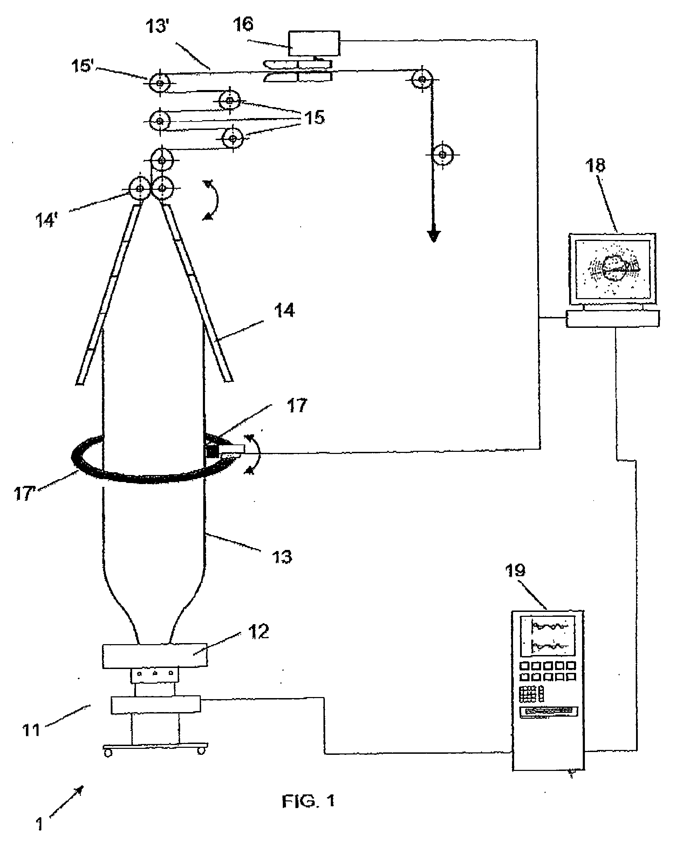

Die einzige Fig.1 zeigt das Prinzipschema einer Mehrschichtfolien-Blasextrusionsanlage , an welcher die Dicke nach dem Verfahren der vorliegenden Erfindung gemessen und überwacht wird.

Die Herstellung von Folien erfolgt in der Blasfolienextrusionsanlage 1 wie folgt: Vom Extruder mit Mehrfach-Ringdüse (nicht gezeigt) wird die austretende Schmelze der verschiedenen Thermoplaste zu einem Schlauch geformt. Dieser Folienschlauch wird mit einer Geschwindigkeit abgezogen, die grösser ist, als die Austrittsgeschwindigkeit der Schmelze. Durch einen Anschluss für Druckluft im Blaskopf 11 mit dem Formwerkzeug 12 wird der Schlauch zur Folienblase 13 aufgeblasen. Am Ende der Flachlegung 14 wird die Folienblase mit zwei Abquetschwalzen 14' abgequetscht. Der flachgelegte Folienschlauch 13' wird dann zur Wickelvorrichtung (nicht gezeigt) geleitet (Pfeil) und zu einer Rolle gewickelt.

Die Dicke der Folie wird an der Folienblase 13 mit einem ersten, z.B. kapazitiven Sensor 17, gemessen, der nach dem Reflexionsprinzip arbeitet. Der Sensor 17 läuft auf einer Bahn 17' reversierend um die Folienblase 13 herum und zurück. Der Sensor kann auch kontinuierlich um die Folienblase 13 laufen. Der Reversiervorgang bzw. die Umlaufzeit für den Sensor 17 dauert eine bis mehrere Minuten.

Nach den Abquetschwalzen 14' wird der Folienschlauch über die Wendestangen 15 zur fixen Rolle 15' geführt. Die Reversiervorrichtung mit den Wendestangen 15 sorgt dafür, dass sich die Randbereiche der abgequetschten Folienblase über den gesamten Umfang der Folienblase verschieben.

Dies hat zur Folge, dass, wenn am Rand des flachgelegten Folienschlauchs 13' mit dem zweiten Sensor 16 die Dicke gemessen wird, ein Profil der Dicke quer zur Laufrichtung, um die Folienblase gemessen wird. Der Sensor 16 arbeitet z.B. kapazitiv transmissiv.

Die Messwerte der beiden Sensoren 16 und 17 werden dem Rechner zugeführt.
Der Rechner 18 ermittelt daraus einen korrigierten Wert für die Dicke, sowie einen Korrekturwert oder ein Korrekturprofil für den Sensor 17, was im Weiteren noch eingehend erläutert werden wird.

Das Profil der Gesamtdicke, welche der Rechner 18 berechnet, werden der Konsole 19 zugeführt, mit welcher die Anlage 1, d.h. der Extrusionsprozess gesteuert und geregelt wird. Auf dem Bildschirm des Rechners 18, können die ermittelten Werte für die gesamte Dicke beispielsweise graphisch und/oder numerisch dargestellt werden.

Die Werte für die Dicke können auch an die Konsole 19 für die Steuerung, Regelung, Überwachung und Einstellung der Mehrschichtfolien-Blasextrusionsanlage übermittelt werden, wo die Daten ebenfalls auf einem Bildschirm dargestellt werden könnten. Schliesslich kann auch vorgesehen sein, dass die Konsole 19 die Dicke der Folie aufgrund der nach dem Verfahren im Rechner 18 ermittelten Dickenwerte regelt und steuert wie dies schon früher erläutert wurde.

Die beiden Sensoren 16 und 17 haben aufgrund ihrer verschiedenen Funktionsprinzipien verschiedene Empfindlichkeit für einzelne Schichten der Mehrschichtfolien. Die Messungen bzw. die Messwerte des Sensors 17 der reflektiv misst, sind direkt proportional von der Dicke und direkt proportional von der Dielektrizitätskonstanten der Mehrschichtfolie abhängig. Zudem ist kann diese Dielektrizitätskonstante stark von der Temperatur der Folie abhängig sein.

Die Messungen des Sensors 16, der die Dicke transmissiv misst, sind dagegen nur wenig abhängig von der Dielektrizitätskonstante der Werkstoffe der Mehrschichtfolien. Es hat sich gezeigt, dass die Messgenauigkeit der Gesamtdicke, welche mit dieser Methode erreicht wird, den Anforderungen der Praxis genügt.

Völlig unabhängig von der Dielektrizitätskonstante sind alle in der Beschreibung aufgeführten nicht kapazitiven Messverfahren.

Im Folgenden wird als Beispiel gezeigt, wie das Korrekturprofil aus den Messwerten der beiden Sensoren 16 und 17 berechnet werden kann, unter der Voraussetzung, die Messgenauigkeit des zweiten Sensors (16) werde als genügend genau akzeptiert. Dabei werden die Definitionen von Tabelle 1 benützt.

**TABELLE 1 / DIE VERWENDETEN BEZEICHNUNGEN / IHRE BEDEUTUNG**

| Zeichen | Bedeutung | |
|---|---|---|
| D1 | Dickenmesswert des Sensors 16, welcher wenig oder nicht von der Dielektrizitätskonstanten εᵣ abhängig ist | |
| D2 | Dickenmesswert des Sensors 17, welcher proportional von der Dielektrizitätskonstanten εᵣ abhängig ist | |
| D | Gesamtdicke der Folie, genügend gute Messung oder aus der Kombination von D1 und D2 berechneter Wert | |
| Kf | Korrekturfaktor pro Profilpunkt | |

Durch die Kombination der Messdaten D2 von Sensor 17 und D1 von Sensor 16 kann das Profil der Gesamtdicke D präziser bestimmt werden, als nur mit dem Sensor 16 oder dem Sensor 17 allein. Dies ist Stand der Technik. In EP 1 205 293 A1 wird zum Beispiel gezeigt, dass mit kapazitiven Sensoren an diesen Positionen die Dicken der Einzelschichten berechnet werden können. Somit kann auch die korrekte Gesamtdicke bestimmt werden.

Aus dem kombinierten Gesamtprofil (D) wird durch den Vergleich mit dem vom Sensor 17 ermittelten Profil (D2) ein Korrekturwert (D/D2) pro Profilpunkt berechnet, was ein Korrekturprofil ergibt. Als Gesamtprofil (D) kann entweder die korrekte berechnete Dicke oder zur Vereinfachung auch nur das Resultat des zweiten Sensors (16) verwendet werden. Die Qualität der damit berechneten Extrapolation erreicht im besten Fall diejenige des verwendeten Gesamtprofils.

Als genügend genau wird die Messung betrachtet, wenn die Messfehler im Querprofil kleiner als 2% bis 3 % sind, was den Schwankungen der Dicke in Produktionsrichtung entspricht.

Das Ziel muss also sein, mit einer Extrapolation mindestens diese Genauigkeit zu erreichen, und zwar mit der Erfassungsgeschwindigkeit des schneller messenden Sensors 17.

Mit dem Sensor 17 auf der Bahn 17' kann das Dickenprofil schnell gemessen werden, aber bei Mehrschichtfolie mit viel PA wird das gemessene Profil viel mehr durch den PA-Anteil beeinflusst, als durch die Gesamtdicke. Es ist aber die Gesamtdicke, welche auf ein möglichst flaches Profil geregelt werden soll.

Mit dem Sensor 16 wird das Gesamtprofil wesentlich weniger durch den PA-Anteil beeinflusst, die Messung dauert aber etwa 5 bis 10 mal länger, was für die Profilregelung nachteilig ist.

Mit der Annahme, dass an jedem Profilpunkt der PA-Anteil, bzw. sein Einfluss auf den Messsensor und das Messgerät im Verhältnis zur gesamten Dicke lange Zeit (länger als 30 Minuten), und somit auch das Korrekturprofil konstant bleibt, können die schnellen Messungen des Sensors 17 korrigiert werden (schnell = kurze Zeit für das Messen eines Profils, was der Umlaufzeit des Sensor 17 um die Folienblase 13 entspricht), sobald vom langsameren Sensor 16 ein erstes Korrekturprofil bestimmt ist.

Für die Korrektur des nächsten, mit dem Sensor 17 ermittelten Profils (D2') wird jeder Profilwert mit dem entsprechenden Korrekturwert des Korrekturprofils multipliziert.

Der Korrekturwert hängt im Wesentlichen vom Verhältnis DA/DE bzw. DA/D ab. Einen wichtigen zusätzlichen Einfluss hat wegen der Temperaturabhängigkeit von εᵣ (PA) auch die Temperatur. Es wird angenommen, dass der PA-Anteil pro Profilpunkt konstant bleibe. Es wird angenommen, dass auch die Temperaturverteilung und damit das Temperaturprofil über dem Umfang der Folienblase konstant bleibt, was auch durchgeführte Temperaturmessung bestätigten. Mit dem Korrekturprofil kann somit auch der Einfluss der Temperaturverteilung über den Umfang der Folienblase korrigiert werden.

Wird als Gesamtprofil als Ausgangspunkt für die Erstellung des Korrekturprofils zum Beispiel direkt das Profil des zweiten Sensors (16), zum Beispiel das eines kapazitiv transmissiv messenden Sensors genommen, gelten die Gleichungen von Tabelle 2.
Ermöglichen die Sensoren eine Dickenmessung der Einzelschichten, so können dementsprechend auch Korrekturfaktoren für jede einzelne Schicht bestimmt werden.

**TABELLE 2 /EXTRAPOLATION DER GESAMTDICKE**

| | GI. Nr. | | Bemerkung |
|---|---|---|---|
| Sensor 16 | (I) | D = D1 | Referenz-Profil Sensor 16 |
| Sensor 17 | (II) | D = Kf * D2 | Referenz-Profil Sensor 17 |
| | (III) | Kf=D/D2 | Korrekturfaktor pro Profilpunkt |
| Sensor 17 | (II)' | D' = Kf' * D2' | neues von Sensor 17 gemessenes Profil |
| | (IV) | Kf' = Kf | Behauptung und Näherung für Extrapolation |
| | (II)' und (IV) | D' = D2' * Kf | Extrapolation aus D2' mit dem Korrekturfaktor pro Profilpunkt |

Anhand von Versuchen mit Testprofilen wurde festgestellt, dass die Extrapolation wesentlich besser und genauer ist, als die Messung mit dem Sensor 17 allein. Wird in der Gleichung 1 für D der korrekt berechnete Wert der Gesamdicke verwendet, so ist der extrapolierte Wert auch besser als die Messung mit dem Sensor 16 allein. Auch schlecht aufeinander abgeglichene Sensoren 16 und 17 der Messgeräte ermöglichen noch eine gute Extrapolation.

Bei dem Verfahren zum Bestimmen der Dicke von Mehrschichtfolien 13 mit Schichten aus verschiedenen nichtleitenden Werkstoffen wird die Dicke der Mehrschichtfolie 13 mit einem ersten Sensor 17 und einem zweiten Sensor 16 und eventuell weiteren Sensoren gemessen. Der erste Sensor 17 misst mit einer kurzen Zykluszeit von ca. 1-2 Minuten das Profil der Gesamtdicke, jedoch mit einem grossen Messfehler. Der zweite Sensor 16 misst das Profil der Gesamtdicke mit einem kleinen Messfehler, jedoch mit einer langen Zykluszeit von ca. 10 bis 30 Minuten.
Durch den Vergleich der beiden Dickenprofile kann für den ersten Sensor 17 ein Korrekturprofil berechnet werden. Unter der Voraussetzung, dass dieses Korrekturprofil über die lange Zykluszeit stabil bleibt, können alle Dickenprofile des Sensors 17 mit diesem Korrekturprofil verrechnet werden, bis wieder ein neues genaueres Dickenprofil vom zweiten Sensor zur Verfügung steht und somit ein neues Korrekturprofil berechnet werden kann.

## Patentansprüche

1. Verfahren zum Bestimmen der gesamten Dicke und/oder von einzelnen Schichten von Mehrschichtfolien (13) mit Schichten aus verschiedenen nichtleitenden Werkstoffen, bei welchem aus den Dickenmesswerten von mindestens zwei nach verschiedenen Messprinzipien arbeitenden Sensoren (16, 17) Korrekturwerte für mindestens einen der Sensoren (16 oder 17) bestimmt werden, aus welchen für mindestens eine nachfolgende Messung aus den Messwerten von nur einem Sensor und den Korrekturwerten für diesen Sensor (16 oder 17) die korrekte gesamte Dicke der Mehrschichtfolie und/oder die Dicke von einzelnen Schichten der Mehrschichtfolie bestimmt wird.

2. Verfahren zur Korrektur einer Messwertreihe von Dickenmesswerten an einer Mehrschichtfolie (13) mit Schichten aus verschiedenen nichtleitenden Werkstoffen mit einem ersten Sensor (17), **gekennzeichnet durch** einen weiteren Sensor (16) oder mehrere weitere Sensoren, wobei der erste Sensor und der oder die weiteren Sensoren für Schichten gleicher Dicke aus gleichem Werkstoff der Mehrschichtfolie (13) unterschiedliche Messwerte erzeugen, und die Messsignale der Sensoren (16, 17) einem Rechner (18) zugeführt werden, der aus den unterschiedlichen Messwerten des ersten Sensors (17) und des oder der weiteren Sensoren (16) die korrekte gesamte Dicke der Mehrschichtfolie (13) bestimmt und aus dem Verhältnis dieser korrekten Gesamtdicke zu den vom Sensor (16 und/oder 17) gemessenen Werten ein Korrekturprofil berechnet und dieses Korrekturprofil dazu benutzt wird, eine nächste Messreihe oder mehrere nächste Messreihen des Sensors (16 und/oder 17) so zu korrigieren, dass daraus wieder ein korrekter Dickenmesswert entsteht.

3. Verfahren nach Anspruch 1 oder 2, bei welchem der verwendete erste Sensor (17) und der oder die zweiten Sensoren (16), mit denen gleiche Dicken von Mehrschichtfolien (13) unterschiedliche Messwerte erzeugen, folgende Typen von Sensoren sind:
- kapazitive Sensoren (16, 17), welche reflektiv oder transmissiv messen,
und/oder
- Sensoren mit ionisierender Strahlung, welche die Rückstreuung der Strahlung, oder die durchdringende Strahlung messen,
und/oder
- Sensoren mit Infrarotstrahlung welche die Infrarotabsorption messen,
und/oder
- optische Sensoren welche mit Interferenzverfahren messen, und/oder
- pneumatische oder mechanische Sensoren zum Messen der Dicke der Folien,
und/oder
- thermische Sensoren,
und/oder
- Sensoren welche die Dicke von Mehrschichtfolie mit Ultraschall messen.

4. Verfahren nach Anspruch 1, 2 oder 3, zum Bestimmen der Dicke von Mehrschichtfolien (13) aus Schichten von Werkstoffen mit unterschiedlicher Dielektrizitätszahl Er, bei welchem der erste Sensor (17) kapazitiv nach dem Reflexionsverfahren (reflektiv) arbeitet, und der zweite Sensor (16) kapazitiv nach dem Transmissionsverfahren (transmissiv) arbeitet.

5. Verfahren nach einem der Ansprüche 1 bis 4, zum Bestimmen der Dicke von Mehrschichtfolien (13) aus Schichten von Werkstoffen mit unterschiedlichen Dielektrizitätskonstanten εᵣ und/oder unterschiedlichen dielektrischen Verlustfaktoren tan δ.

6. Verfahren nach einem der Ansprüche 1 bis 5 bei welchem
der erste Sensor mit einem Messprinzip arbeitet, dessen Dickenmesswerte von der Dielektrizitätskonstante εᵣ des Materials der Folie stark und vorzugsweise direkt proportional abhängig sind, insbesondere mit einem Sensor der mit dem kapazitiv reflektiv arbeitenden Messprinzip arbeitet und misst und
der zweite Sensor mit einem Messprinzip arbeitet, dessen Dickenmesswerte von der Dielektrizitätskonstante εᵣ des Materials der Folie und der Schichten der Folie nicht oder nur schwach abhängig sind, vorzugsweise, mit einem Sensor der die Dicke der Folie kapazitiv transmissiv misst, oder mit einem Sensor, der mit der Rückstreuung ionisierender Strahlung misst oder einem Sensor, der die Dicke der Folie mit einem optischen Interferenzverfahren misst.

7. Anwendung des Verfahrens nach einem der Ansprüche 1 bis 6, in einer Mehrschichtfolien-Blasextrusions-Anlage, zum Messen, Überwachen und/oder Regeln der gesamten Dicke von Mehrschichtfolien (13).

8. Anwendung des Verfahrens nach einem der Ansprüche 1 bis 7 zum Messen Überwachen und/oder Regeln der Dicke der Mehrschichtfolien (13), in einer Mehrschichtfolien-Blasextrusions-Anlage, wobei der erste Sensor (17) die Dicke der Folie (13) an der Folienblase misst und der zweite Sensor (16) die Dicke der Folie am Rand der flachgelegten Folie (13') misst.
